Europäisches Patentamt

European Patent Office

Office européen des brevets

(19)

(11) **EP 1 516 717 A1**

(12) **DEMANDE DE BREVET EUROPEEN**

(43) Date de publication:
**23.03.2005 Bulletin 2005/12**

(51) Int Cl.⁷: **B30B 15/00**

(21) Numéro de dépôt: **04300607.1**

(22) Date de dépôt: **17.09.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **19.09.2003 FR 0311161**

(71) Demandeur: **ADIAPRESS**
**42500 Le Chambon Feugerolles (FR)**

(72) Inventeurs:
- **Michon, Raymond**
  **42600 Ecotay L'Olme (FR)**
- **Chapuis, Alain**
  **42480 La Fouillouse (FR)**

(74) Mandataire: **Dupuis, François**
**Cabinet Laurent et Charras,**
**3 Place de l'Hôtel-de-Ville,**
**BP 203**
**42005 St. Etienne Cédex 1 (FR)**

(54) **Procédé et dispositif amortisseur d'énergie pour machines utilisant la transformation d'énergie adiabatique**

(57)    Cc procédé est remarquable en qu'il consiste à mettre en oeuvre une force statique (F2) de contre poussée supérieure à la pression statique (F1) du vérin pousseur, ladite force statique absorbant en se déplaçant, selon une distance donnée, l'énergie totale et résiduelle du vérin pousseur animée d'une vitesse déterminée.

Fig. 2

EP 1 516 717 A1

**Description**

L'invention se rattache au secteur technique des machines de transformation d'énergie adiabatique et plus particulièrement aux machines de découpage et de cisaillage.

## HISTORIQUE

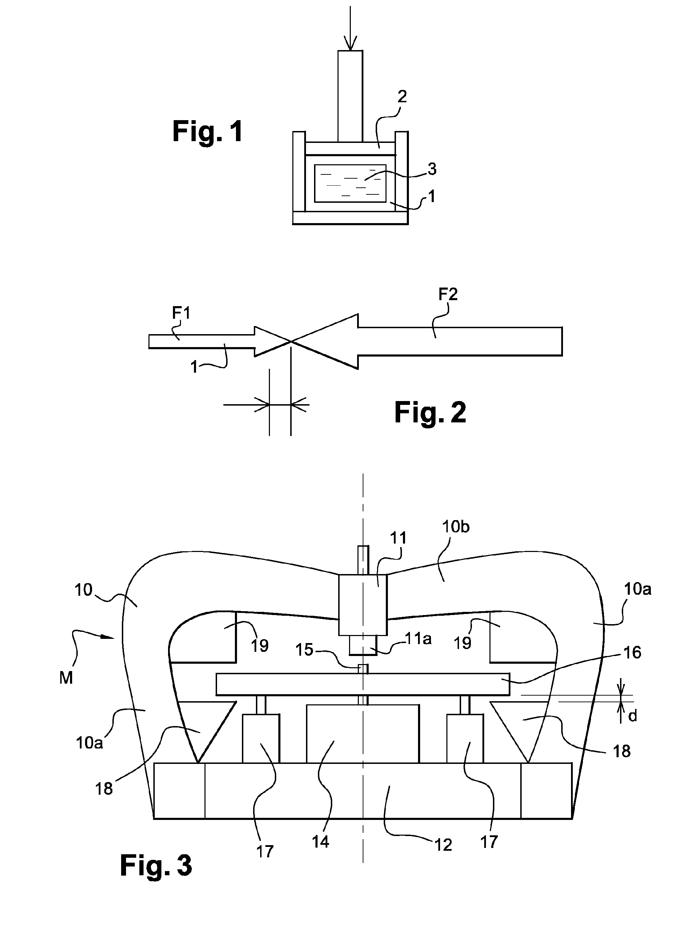

Le concept de machines utilisant la transformation d'énergie adiabatique est connu en soi et a été développé en particulier par la Société HYDROPULSOR, titulaire de nombreux brevets EP 833.714, EP 968.785, EP 1140395, EP 1225998, bien connus des demandeurs dans le cadre d'une exploitation sous licence. Dans le cadre de la mise en oeuvre de la transformation d'énergie adiabatique à des machines de cisaillage adiabatique, on utilise un dispositif amortisseur pour absorber l'énergie résiduelle après chacune des frappes de cisaillage. En outre, cet amortisseur sert également d'amortisseur de sécurité pour absorber la totalité de l'énergie de la machine en cas de défaillance d'utilisation de la machine (mise en route intempestive en l'absence d'outillage et/ou de pièces à cisailler par exemple). A cet effet, le dispositif amortisseur actuellement utilisé est composé de divers éléments et se comporte comme un vérin rempli d'huile et fermé, chargé d'absorber l'énergie par la compression de l'huile dans un volume fermé. On utilise dans ce cas l'élasticité de l'huile et sa compression pour avoir un faible mouvement amortisseur dont la force F va en augmentant jusqu'à l'arrêt du système pousseur. On a ainsi représenté figure 1, sous forme schématique, le mouvement à des fins de compréhension. Le volume fermé est référencé par (1), le piston par (2) et le volume d'huile par (3), la flèche F représentant l'exercice de la force.

En pratique, la mise en oeuvre de ce dispositif dans l'application considérée présente plusieurs inconvénients.

- On constate tout d'abord un échauffement de l'huile nécessitant une purge puis un rétablissement du volume initial de l'huile pour obtenir un fonctionnement correct du dispositif sur de longues cadences.

- L'amortissement dépend de la température de l'huile, de sa qualité, du taux de gaz inclus dans ladite huile et donc de son aptitude à la compressibilité.

- Par ailleurs, l'expérience démontre que l'on ne peut avoir une maîtrise de la course d'amortissement du piston, celui-ci étant dû à la variation du niveau de l'huile absorbante d'énergie.

- On a constaté également une usure rapide des joints d'étanchéité nécessitant un remplacement provoquant un arrêt de la machine trop souvent.

- Par ailleurs, il s'avère difficile de procéder à des simulations de fonctionnement aux chocs.

- En dernier lieu, le coût de la mise en oeuvre de ce type d'amortissement est élevé.

Différents documents de l'art antérieur ont été considérés, mais aucun ne se rapporte au domaine technique de la transformation de l'énergie adiabatique à grande vitesse. Il s'agit des documents US 5832807, JP 10175100, SU 1174286.
    Par suite de l'ensemble de ces inconvénients et limitation, le demandeur a travaillé à la recherche d'un dispositif amortisseur d'énergie adiabatique, de conception permettant d'obvier aux dits inconvénients. La démarche a donc été de reconsidérer la mise en oeuvre de la fonction « amortisseur » pour l'application aux machines de découpage, cisaillage, et plus généralement pour les applications nécessitant l'absorption d'énergie résiduelle ou totale à cadence élevée.

## L'INVENTION

Ainsi, le demandeur a développé un concept d'amortisseur original dans les applications considérées, avec des moyens de mise en oeuvre spécifiques à celles-ci et permettant la construction d'une même architecture de machines notamment pour les applications cisaillage, découpage.

Selon une première caractéristique, le procédé permettant l'amortissement d'énergie pour machines utilisant la transformation d'énergie adiabatique, à fonctionnement et cadences élevés, est remarquable en ce qu'il consiste à mettre en oeuvre une force statique $(F2)$ de contre poussée supérieure à la pression $(F1)$ du vérin pousseur, ladite force absorbant en se déplaçant, selon une distance donnée, l'énergie totale et résiduelle du vérin pousseur animée d'une vitesse déterminée.

Selon une autre caractéristique de l'invention, le dispositif amortisseur, mettant en oeuvre le procédé permettant l'amortissement d'énergie, est remarquable en ce qu'il inclut un tablier amortisseur associé à des moyens amortisseurs agissant en contre-poussée et autorisant le déplacement dudit tablier selon une distance (d) permettant l'absorption de la force résiduelle résultant du différentiel entre la force de poussée et la force de contre-poussée.

Selon une autre caractéristique de l'invention, l'architecture de la machine, incluant le dispositif amortisseur, est caractérisée en ce que la machine comprend un bâti (10) ayant une configuration pour définir un espace intérieur pour la mise en place du dispositif amortisseur, ledit bâti présentant une configuration de piètement en arches (10a) avec une partie centrale supérieure (10b) susceptible de recevoir la tête de frappe (11) de l'outil ou marteau, et en ce que la tige de frappe se trouve en regard du volume intérieur de la machine pour agir sur le dispositif amortisseur et en ce que le bâti reçoit ou intègre une table support de la matrice d'outillage de découpe ou de cisaillage, ladite table recevant un moyen poussoir situé dans le prolongement axial de la tige de frappe précitée et en ce que le moyen poussoir est susceptible d'être transporté axialement et à assurer par des moyens l'opération de découpe ou de cisaillage des produits traités, et en ce que le bâti incorpore le dispositif amortisseur qui inclut un tablier amortisseur entourant la matrice d'outillage de découpe ou de cisaillage.

Ces caractéristiques et d'autres encore ressortiront bien de la suite de la description.

Pour fixer l'objet de l'invention illustrée aux figures des dessins où :

- la figure 1 est une vue à caractère schématique illustrant le dispositif amortisseur, selon l'art antérieur,
- la figure 2 est une vue à caractère schématique illustrant le principe du dispositif amortisseur selon l'invention,
- la figure 3 est une vue de l'architecture de la machine incluant le dispositif amortisseur selon l'invention,
- la figure 4 est une vue en variante du dispositif amortisseur par des moyens mécaniques,
- la figure 5 est un schéma hydraulique applicable au dispositif amortisseur selon l'invention dans une mise en oeuvre.

Afin de rendre plus concret l'objet de l'invention, on le décrit maintenant d'une manière non limitative aux figures des dessins.

Le dispositif amortisseur d'énergie pour machines utilisant la transformation d'énergie adiabatique, à cadence élevée, met en oeuvre un procédé, avec une force statique (F2) de contre poussée supérieure à la pression (F1) du vérin poussoir (1) de la machine, ladite force statique absorbant, en se déplaçant selon une distance donnée (d), l'énergie totale ou résiduelle du vérin poussoir animée d'une vitesse déterminée.

Ainsi, l'énergie totale emmagasinée par le piston (1) de la tête de frappe de la machine est définie par l'équation $E = 1/2mV2$. L'énergie absorbée par l'amortisseur est définie par l'équation $Ea = (F1-F2)Xd$, où F1 est la force de poussée, F2 la force de contre poussée, d la distance de déplacement de l'amortisseur. Ainsi, la distance pour arrêter le piston de la tête de frappe est défini par l'équation

$$d = \frac{Ea.}{F1 \quad -F2}$$

La mise en oeuvre de ce procédé entraîne le choix de moyens propres à assurer l'obtention et la définition de la force statique de contre poussée, lesdits moyens pouvant être mécaniques, hydrauliques, pneumatiques.

En se référant à la figure 3, la machine utilisant la transformation d'énergie adiabatique est référencée en son ensemble par (M) et comprend un bâti (10) ayant une configuration pour définir un espace intérieur pour la mise en place du dispositif de l'invention. Ce bâti présente, par exemple, une configuration de piètement en arches (10a) avec une partie centrale supérieure (10b) susceptible de recevoir la tête de frappe (11) de l'outil ou marteau. La tige (11a) de frappe se trouve en regard du volume intérieur de la machine pour agir sur le dispositif de l'invention. Le bâti reçoit ou intègre une table support (12) de la matrice d'outillage de découpe ou de cisaillage (14) représentée dans son ensemble, ladite table recevant un moyen poussoir (15) situé dans le prolongement axial de la tige (11a) de frappe précitée. Le moyen poussoir est susceptible d'être transporté axialement et à assurer par les moyens usuels connus l'opération de découpe ou de cisaillage des produits traités. Le bâti incorpore le dispositif amortisseur qui inclut un tablier amortisseur (16) entourant la matrice (14) d'outillage de découpe ou de cisaillage. Le tablier amortisseur est donc, selon la réalisation de la figure 3, monté en suspension sur un ou plusieurs vérins amortisseurs (17) accouplés l'un à l'autre et mettant en oeuvre le procédé précité. La base des vérins (17) est fixée sur la table support (12). La tige des vérins amortisseurs (17) est accouplée au tablier amortisseur. La course de déplacement « d » du tablier amortisseur est représentée avec l'introduction de butées de limitation de mouvement (18 - 19).

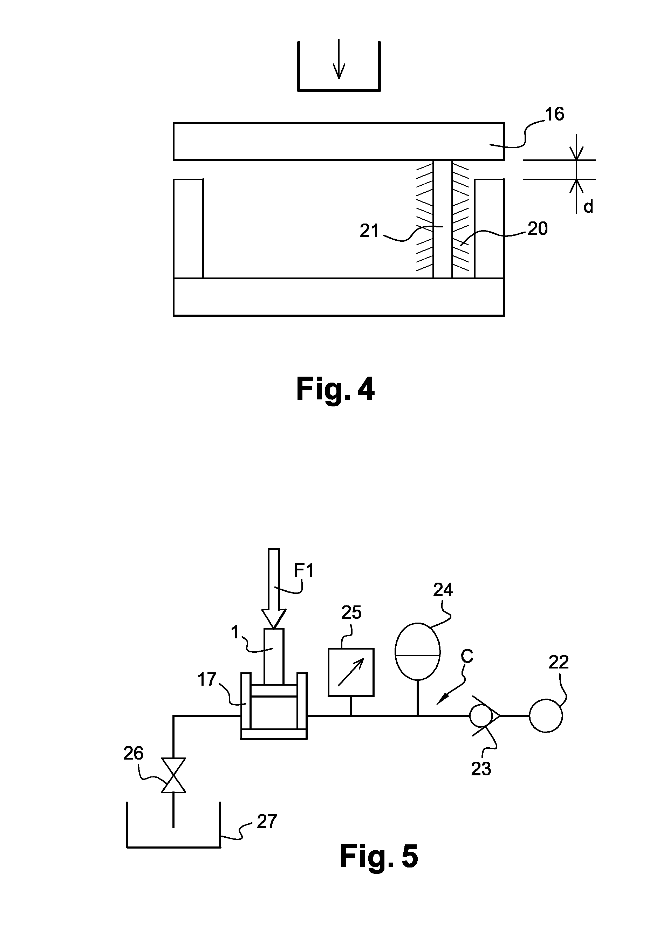

Dans la mise en oeuvre représentée figure 4, les moyens amortisseurs sont mécaniques à partir des moyens de rappel élastiques du type ressorts, rondelles « Belleville » (20), disposés et guidés autour d'une ou de plusieurs colonnes (21) verticales disposées sur la face inférieure du tablier amortisseur. Ladite ou lesdites colonnes sont guidées verticalement à partir d'un entourage spécifique disposé à partir de la table support précitée. On a ainsi représenté par « d » la distance nécessaire à l'amortisseur selon le principe du procédé. En variante, on peut utiliser tous autres moyens assurant la fonction de rappel élastique, tels que barres de torsion avec culbuteurs, lames ressort, ressorts hélicoïdaux.

En se référant maintenant à la figure 5 correspondant à la mise en oeuvre du dispositif amortisseur sous forme hydraulique, on a représenté un schéma hydraulique applicable permettant une optimisation du procédé et évitant tous les échauffements d'huile rencontrés précédemment. Ce schéma hydraulique s'applique aux vérins amortisseurs représentés figure 3, et on a illustré, pour faciliter la compréhension, le vérin amortisseur sollicité sous l'action de la force (F1) de la tête de frappe. Le dispositif amortisseur inclut un circuit de distribution et d'évacuation d'huile nouvelle et usagée pour permettre un renouvellement partiel du volume d'huile et éviter les effets inappropriés d'échauffement.

A cet effet, le circuit (c) comprend, en amont du vérin amortisseur, une pompe (22) de distribution d'huile, un clapet anti-retour (23), un accumulateur (24), un pressostat (25) et, en aval, une vanne de décharge (26) d'une quantité d'huile usagée et un réservoir d'huile (27). Ainsi, la pompe alimente le circuit dont la pression est régulée par le pressostat. La pression est maintenue constante par l'accumulateur capable d'absorber la variation de volume d'huile correspondant au mouvement du vérin amortisseur. Après chaque amortissement, la vanne de décharge s'ouvre pendant un temps qui permet l'évacuation d'un volume d'huile, la pompe entraînant simultanément l'introduction d'un volume d'huile identique mais refroidi prélevé selon un cycle en continu dans ledit réservoir d'huile ou un autre.

Ainsi, le dispositif amortisseur, selon l'invention, offre de nombreux avantages. Il répond tout d'abord au problème posé en obviant aux inconvénients signalés. En outre, il permet une rationalisation industrielle des architectures de machines utilisant la transformation d'énergie adiabatique. On peut ainsi avoir une même structure de machines pour effectuer des opérations de découpage et de cisaillage à partir du même bâti en diminuant les coûts d'études et de réalisation.

La mise en oeuvre du dispositif est aisé à obtenir et à réaliser avec une réduction de coût par rapport à l'art antérieur. Les performances des machines sont en plus améliorées.

## Revendications

1. Procédé permettant l'amortissement d'énergie pour machines utilisant la transformation d'énergie adiabatique, à fonctionnement et cadences élevés, **caractérisé en ce qu'il** consiste à mettre en oeuvre une force statique (F2) de contre poussée supérieure à la pression statique (F1) du vérin pousseur, ladite force statique absorbant en se déplaçant, selon une distance donnée, l'énergie totale et résiduelle du vérin pousseur animée d'une vitesse déterminée.

2. Dispositif amortisseur d'énergie mettant en oeuvre le procédé, selon la revendication 1, **caractérisé en ce qu'il** inclut un tablier amortisseur (16) associé à des moyens amortisseurs agissant en contre-poussée et autorisant le déplacement dudit tablier selon une distance (d) permettant l'absorption de la force résiduelle résultant du différentiel entre la force de poussée et la force de contre-poussée.

3. Dispositif, selon la revendication 2, **caractérisé en ce que** les moyens amortisseurs agissant en contre-poussée sont du type à vérins hydrauliques.

4. Dispositif, selon la revendication 2, **caractérisé en ce que** les moyens amortisseurs agissant en contre-poussée sont du type à vérins pneumatiques

5. Dispositif, selon la revendication 2, **caractérisé en ce que** les moyens amortisseurs agissant en contre-poussée sont du type mécanique tels que ressorts, rondelles « Belleville » (20).

6. Dispositif, selon la revendication 5, **caractérisé en ce que** les moyens de rappel élastique (20) sont disposés et guidés autour d'une ou de plusieurs colonnes verticales (21) disposées sur la face inférieure du tablier amortisseur, la ou les colonnes étant guidées verticalement à partir d'un entourage spécifique disposé à partir de la table support.

7. Dispositif, selon la revendication 3, **caractérisé en ce qu'il** inclut un circuit de distribution et d'évacuation d'huile nouvelle et usagée pour permettre un renouvellement partiel du volume d'huile,

et **en ce que** le circuit (c) comprend, en amont du vérin amortisseur, une pompe (22) de distribution d'huile, un clapet anti- retour (23), un accumulateur (24), un pressostat (25) et, en aval, une vanne de décharge (26) d'une quantité d'huile usagée et un réservoir d'huile (27),
et **en ce que** la pompe alimente le circuit dont la pression est régulée par le pressostat,
et **en ce que** la pression est maintenue constante par l'accumulateur capable d'absorber la variation de volume d'huile correspondant au mouvement du vérin amortisseur,
et **en ce que** après chaque amortissement, la vanne de décharge s'ouvre pendant un temps qui permet l'évacuation d'un volume d'huile, la pompe entraînant simultanément l'introduction d'un volume d'huile identique mais refroidi prélevé selon un cycle en continu dans ledit réservoir d'huile à un autre.

8. Machine incluant un dispositif amortisseur d'énergie utilisant la transformation d'énergie adiabatique incluant un dispositif amortisseur, selon l'une quelconque des revendications 2 à 7, **caractérisée en ce que** la machine comprend un bâti (10) ayant une configuration pour définir un espace intérieur pour la mise en place du dispositif amortisseur, ledit bâti présentant une configuration de piètement en arches (10a) avec une partie centrale supérieure (10b) susceptible de recevoir la tête de frappe (11) de l'outil ou marteau,

et **en ce que** la tige (11a) de frappe se trouve en regard du volume intérieur de la machine pour agir sur le dispositif amortisseur,
et **en ce que** le bâti reçoit ou intègre une table support (12) de la matrice d'outillage de découpe ou de cisaillage (14), ladite table recevant un moyen poussoir (15) situé dans le prolongement axial de la tige (11a) de frappe précitée, et **en ce que** le moyen poussoir est susceptible d'être transporté axialement et à assurer par des moyens l'opération de découpe ou de cisaillage des produits traités, et **en ce que** le bâti incorpore le dispositif amortisseur qui inclut un tablier amortisseur (16) entourant la matrice (14) d'outillage de découpe ou de cisaillage.

9. Machine, selon la revendication 8, **caractérisée en ce que** le tablier amortisseur est monté en suspension sur un ou plusieurs vérins amortisseurs (17) accouplés l'un à l'autre,

et **en ce que** la base des vérins (17) est fixée sur la table support (12),
et **en ce que** la tige des vérins amortisseurs (17) est accouplée au tablier amortisseur,
et **en ce que** la course de déplacement « d » du tablier amortisseur est limitée par l'introduction de butées de mouvement (18 - 19).

10. Dispositif selon la revendication 6, **caractérisé en ce que** les moyens de rappel élastique sont du type barres de torsion avec culbuteurs, lames ressorts, ressorts hélicoïdaux.

**Fig. 1**

2

3

1

F1

F2

1

**Fig. 2**

11 10b

10

10a

19 11a 19

M 15 16

10a 18

18 d

17 14 12 17

**Fig. 3**

EP 1 516 717 A1

**Fig. 4**

16

21

20

d

F1

1

25

24

C

17

22

26

23

27

**Fig. 5**

7

EP 1 516 717 A1

| Office européen des brevets | **RAPPORT DE RECHERCHE EUROPEENNE** | Numéro de la demande EP 04 30 0607 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 832 807 A (ZOELLER GEORG  ET AL) 10 novembre 1998 (1998-11-10) * colonne 4, ligne 30 - ligne 37 * | 1-7 | B30B15/00 |
| X | PATENT ABSTRACTS OF JAPAN vol. 1998, no. 11, 30 septembre 1998 (1998-09-30) & JP 10 175100 A (AIDA ENG LTD), 30 juin 1998 (1998-06-30) * abrégé * | 1-9 | |
| X | DATABASE WPI Week 198610 Derwent Publications Ltd., London, GB; AN 1986-067917 XP002280512 & SU 1 174 286 A (FORGE PRESS EQUIP) 23 août 1985 (1985-08-23) * abrégé * | 1-9 | |
| A | DATABASE WPI Week 198843 Derwent Publications Ltd., London, GB; AN 1988-305852 XP002280513 & SU 1 388 325 A (FORGE PRESS EQUIP) 15 avril 1988 (1988-04-15) * abrégé * | | DOMAINES TECHNIQUES RECHERCHES (Int.Cl.7) B30B B22F B23D B23Q |
| A | US 5 802 966 A (SCHOCH DANIEL A) 8 septembre 1998 (1998-09-08) | | |
| A | DE 31 12 393 A (FELDHAUS HANS) 14 octobre 1982 (1982-10-14) | | |

-/--

Le présent rapport a été établi pour toutes les revendications

| Lieu de la recherche | Date d'achèvement de la recherche | Examinateur |
|---|---|---|
| La Haye | 14 décembre 2004 | Pemberton, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

## RAPPORT DE RECHERCHE EUROPEENNE

**Office européen des brevets**

Numéro de la demande

EP 04 30 0607

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PATENT ABSTRACTS OF JAPAN vol. 1997, no. 08, 29 août 1997 (1997-08-29) & JP 9 094700 A (YAMAGAMI SEIICHIRO), 8 avril 1997 (1997-04-08) * abrégé * | | |
| A | US 6 202 757 B1 (DAHLBERG KURT) 20 mars 2001 (2001-03-20) | | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| La Haye | 14 décembre 2004 | Pemberton, P |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**　　　EP 04 30 0607

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-12-2004

| Document brevet cité au rapport de recherche | | Date de publication | Membre(s) de la famille de brevet(s) | | Date de publication |
|---|---|---|---|---|---|
| US 5832807 | A | 10-11-1998 | DE | 4420682 A1 | 04-01-1996 |
| | | | AT | 178241 T | 15-04-1999 |
| | | | DE | 59505522 D1 | 06-05-1999 |
| | | | WO | 9534399 A1 | 21-12-1995 |
| | | | EP | 0765203 A1 | 02-04-1997 |
| | | | ES | 2131834 T3 | 01-08-1999 |
| | | | JP | 10501182 T | 03-02-1998 |
| JP 10175100 | A | 30-06-1998 | AUCUN | | |
| SU 1174286 | A | 23-08-1985 | SU | 1174286 A1 | 23-08-1985 |
| SU 1388325 | A | 15-04-1988 | SU | 1388325 A1 | 15-04-1988 |
| US 5802966 | A | 08-09-1998 | BR | 9703640 A | 27-10-1998 |
| | | | CA | 2202436 A1 | 05-02-1998 |
| | | | CH | 692188 A5 | 15-03-2002 |
| | | | DE | 19720119 A1 | 12-02-1998 |
| | | | GB | 2316030 A ,B | 18-02-1998 |
| | | | IT | T0970706 A1 | 05-02-1998 |
| | | | JP | 3120056 B2 | 25-12-2000 |
| | | | JP | 10113796 A | 06-05-1998 |
| DE 3112393 | A | 14-10-1982 | DE | 3112393 A1 | 14-10-1982 |
| JP 9094700 | A | 08-04-1997 | AUCUN | | |
| US 6202757 | B1 | 20-03-2001 | WO | 9700751 A1 | 09-01-1997 |
| | | | AT | 197131 T | 15-11-2000 |
| | | | AU | 3088695 A | 22-01-1997 |
| | | | DE | 69519238 D1 | 30-11-2000 |
| | | | DE | 69519238 T2 | 07-06-2001 |
| | | | DK | 833714 T3 | 05-03-2001 |
| | | | EP | 0833714 A1 | 08-04-1998 |
| | | | ES | 2154341 T3 | 01-04-2001 |
| | | | JP | 11508187 T | 21-07-1999 |

EPO FORM P0460

Pour tout renseignement concernant cette annexe : voir Journal Officiel de l'Office européen des brevets, No.12/82